# EUROPEAN PATENT SPECIFICATION

(11) **EP 1 229 080 B1**
(45) Date of publication and mention of the grant of the patent: **05.07.2006**
(21) Application number: 02003883.2
(22) Date of filing: 27.12.2000
(51) Int. Cl.: C08L 77/00, G03G 5/10

(54) **Mixed resin compound, resin pipe, production of resin pipe, and photosensitive drum**
Gemischte Harzzusammensetzung, Rohr aus Harz, die Herstellung von einem Rohr aus Harz und eine lichtempfindliche Trommel
Composition de résine mélangée, tuyau en résine, procédé pour la préparation d'un tuyau de résine et un tambour photosensible

(30) Priority: 27.12.1999 JP 36977799; 27.12.1999 JP 36977899; 27.12.1999 JP 36977999; 27.12.1999 JP 36978099; 27.12.1999 JP 36978199; 27.12.1999 JP 36978299; 27.12.1999 JP 36978399; 27.12.1999 JP 36978499
(43) Date of publication of application: 07.08.2002
(62) Divisional of application: 00311716.5
(73) Proprietor: Bridgestone Corporation, Tokyo (JP)
(72) Inventor: Iizuka, Munenori, Kodaira-shi, Tokyo (JP); Machida, Kunio, Tokyo (JP)
(74) Representative: Watson, Robert James

(56) References cited:
- EP-A- 0 644 467
- EP-A- 0 984 330
- DE-A- 19 847 696
- US-A- 4 702 859
- US-A- 5 681 524
- US-A- 5 991 574
- PATENT ABSTRACTS OF JAPAN vol. 1998, no. 13, 30 November 1998 (1998-11-30) & JP 10 217291 A (BRIDGESTONE CORP), 18 August 1998 (1998-08-18)
- D.V. ROSATO, D.V. ROSATO: "Injection Molding Handbook" , CHAPMAN & HALL , NEW YORK XP002217447 * page 481-482 * * page 504-505 *
- G. BECKER, D.BRAUN: "Kunststoff Handbuch ; 3; Polyamide" , CARL HANSER VERLAG , MÜNCHEN WIEN XP002217448 * page 356 *
- PATENT ABSTRACTS OF JAPAN vol. 2000, no. 06, 22 September 2000 (2000-09-22) & JP 2000 075529 A (BRIDGESTONE CORP), 14 March 2000 (2000-03-14)

## Description

The present invention relates to a mixed resin compound, a resin pipe, a process for production of said resin pipe, and a photosensitive drum. The photosensitive drum is used for electrophotographic apparatus such as copying machines, facsimiles, and printers.

The electrostatic recording process for copying machines, facsimiles, and printers consists of several steps. First, the photosensitive drum has its surface electrostatically charged uniformly. The charged surface of the photosensitive drum is exposed to an image projected from an optical system. The exposed part loses charge, thereby forming an electrostatic latent image, which is subsequently supplied with a toner. The toner electrostatically sticks to the photosensitive drum, thereby forming a toner image. Finally, the toner image is transferred for printing to a recording medium such as paper, OHP, photographic paper.

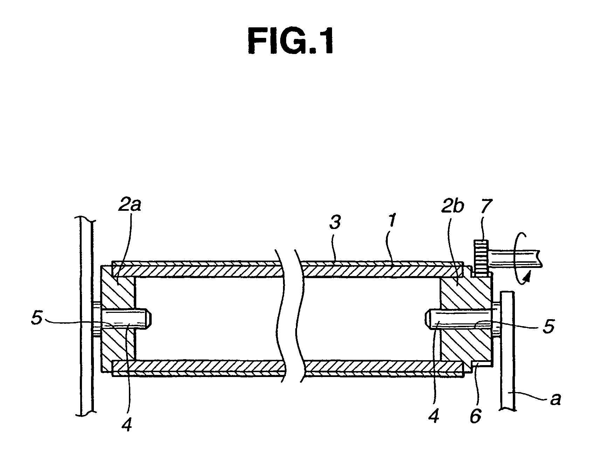

The above-mentioned electrostatic recording process usually employs a photosensitive drum, which consists of a cylindrical base having good conductivity, flanges firmly fitted into both ends of thereof, and a photosensitive layer formed on the outer surface thereof, as shown in Fig. 1. The photosensitive drum is rotatably supported by shafts, which are inserted into holes in the flanges and attached to the main body a of the electrophotographic apparatus. The photosensitive drum is turned by a motor through a driving gear and a driven gear formed on the flange.

The above-mentioned cylindrical base is conventionally made of aluminum alloy on account of its light weight, good machinability, and high conductivity.

Unfortunately, the cylindrical base of aluminum alloy needs precision machining to meet stringent requirements, such as dimensional accuracy and prescribed surface roughness, and to permit the flanges to fit into its ends. It occasionally needs treatment to prevent its surface oxidation. Such additional processes lead to high production cost, and hence aluminum alloy is not necessarily a satisfactory material for the cylindrical base constituting the photosensitive drum.

Meanwhile, there has been proposed an idea of making the cylindrical base from a resin compound composed mainly of polyphenylene sulfide (PPS) resin. According to this idea, it is possible to produce a light cylindrical base superior in chemical and heat resistance comparatively easily by injection molding. It is also possible to form either of the flanges 2a and 2b integrally with the cylindrical base from the same resin compound.

The PPS-based resin compound as a raw material for the cylindrical base 1 of the photosensitive drum needs to contain equal to or more than 20 weight% of carbon black to impart electrical conductivity. With such a high content of carbon black, the PPS-based resin compound is very brittle and hence needs reinforcement with glass fiber or the like, so that the resulting cylindrical base possesses required strength.

The above-mentioned conventional technology, however, has the following problems to be solved.

The PPS-based resin compound incorporated with a large amount of carbon black and reinforcing fiber is extremely poor in flowability when it is melted. Consequently, it is poor in surface transferability at the time of injection molding, and the resulting cylindrical base is poor in surface smoothness. This is disadvantageous to forming the photosensitive layer on its surface.

In addition, a resin pipe obtained by injection molding from a thermoplastic resin or a compound thereof is subject to dimensional change with time after molding. Therefore, it is not suitable for the base of the photosensitive drum which needs an extremely high dimensional accuracy.

On the other hand, the cylindrical base formed from a PPS resin compound is poor in coatability when the photosensitive layer is formed thereon. Thus, the resulting photosensitive drum does not fully exhibit its printing performance on account of its incomplete photosensitive layer. In other words, the photosensitive drum formed by coating the resin cylindrical base with a photosensitive material tends to cause defective images (such as black spots) when it runs in a laser printer.

Another disadvantage of the resin cylindrical base is that its outer surface is subject to damage at the time of demolding, annealing that follows demolding, and coating with the photosensitive material. Damages on the outer surface adversely affect coatability and result in an incomplete photosensitive layer. The state of the photosensitive layer greatly affects the printing performance of the photosensitive drum.

Moreover, any resin molded product obtained by injection molding is subject to shrinkage during cooling and curing that follow injection. This shrinkage is one of the causes to deteriorate the dimensional accuracy of the resin cylindrical base.

Another disadvantage of the resin cylindrical base is that its dimensional accuracy is affected by heating and drying which are carried out after the photosensitive layer has been formed. The photosensitive layer is formed on the outer surface of the cylindrical base by coating with a solution of a photosensitive material (such as phthalocyanine and diphenylhydrazone) and a binder in a solvent (such as alcohol, chloroform, and toluene). The coating process is followed by drying at about 100-120°C for about 30-120 minutes for solvent removal. In this drying step, the cylindrical base is also exposed to heat and hence experiences dimensional change, with the external diameter and straightness subtly changing. This deteriorated dimensional accuracy adversely affects the performance of the photosensitive drum and hence aggravates the printing performance.

Another disadvantage of the resin cylindrical base is that it sometimes breaks when it is provided with the flange 2a or 2b. This leads to a decrease in yields.

Moreover, the resin cylindrical base is poor in coatability for the photosensitive layer. To form the photosensitive layer, the outer surface of the cylindrical base is coated with a solution of a photosensitive material (such as phthalocyanine and diphenylhydrazone) and a binder in a solvent (such as alcohol, chloroform, and toluene). Subsequently, the coating layer is dried at about 100-120°C for about 30-120 minutes for solvent removal. The conventional resin base is slow in temperature rise in heating and drying and hence takes a long time for solvent removal. This is disadvantageous for mass production. Incomplete solvent removal results in poor images (such as black spots) at the time of printing. Thus the coatability of the photosensitive layer greatly affects the printing performance of the photosensitive drum.

The present invention was completed in view of the foregoing.

It is an object of the present invention to provide a process for producing a resin pipe which is superior in dimensional stability and is suitable for applications (such as the base of photosensitive drums) which need high dimensional stability.

In order to achieve the above-mentioned object, the present inventors carried out extensive studies to find that a resin pipe changes with time in dimensions after its molding in the following way. When a molten resin solidifies gradually, its molecules orient to form the most stable crystalline structure. However, in the case of injection molding, the molten resin injected into the mold cavity is cooled so rapidly that molecular orientation stops before the stable state is reached. The resulting molded product has the residual stress which gradually dissipates, causing dimensional change with time.

The present inventors' investigation revealed that it is possible to prevent dimensional change and hence to produce a resin pipe having good dimensional stability and dimensional accuracy required of the base of the photosensitive drum, if the injection-molded product undergoes annealing under adequate conditions for molecules to re-orient after demolding so that the residual stress is relieved to give a stable crystalline state.

The present invention provides a mixed resin compound, a resin pipe, a process for production of said resin pipe, and a photosensitive drum, which are explained in the following.

The first aspect of the present invention is directed to a process for producing a resin pipe by injection molding from a thermoplastic resin or a resin compound based on said thermoplastic resin, wherein the molded product undergoes annealing after demolding , wherein the resin compound contains at least one resin component selected from a polyamide resin obtained from metaxylylenediamine and adipic acid, and an alloy resin obtained by blending a polyamide resin with a resin having a water absorption no higher than 0.3%.

The second aspect of the present invention is directed to a process for producing a resin pipe as defined in the first aspect, wherein the annealing is carried out at 100-140°C for 0.5-2 hours.

The third aspect of the present invention is directed to a process for producing a resin pipe as defined in the first aspect, wherein the resin pipe is an electrically conductive resin pipe formed by injection molding from an electrically conductive resin compound composed of a thermoplastic resin and an electrically conducting material dispersed therein.

The fourth aspect of the present invention is directed to a process for producing a resin pipe as defined in the third aspect, wherein the electrically conductive resin compound contains carbon black as an electrically conducting material.

The fifth aspect of the present invention is directed to a process for producing a resin pipe as defined in the fourth aspect, wherein the content of the carbon black is 5-30 weight%.

The sixth aspect of the present invention is directed to a process for producing a resin pipe as defined in the first aspect, wherein the electrically conductive resin compound is one which contains a reinforcing inorganic filler dispersed therein.

The seventh aspect of the present invention is directed to a process for producing a resin pipe as defined in the sixth aspect, wherein the content of the reinforcing inorganic filler is 1-30 weight%.

The eighth aspect of the present invention is directed to a process for producing a resin pipe as defined in the first aspect, wherein the resin pipe is a base for a photosensitive drum.

### BRIEF DESCRIPTION OF THE DRAWING

Fig. 1 is a schematic sectional view showing one example of the photosensitive drum.

### DETAILED DESCRIPTION OF THE PREFERRED EMBODIMENTS

A detailed description of the invention follows. Resins useful in the present invention are those selected from a polyamide resin obtained from metaxylylenediamine and adipic acid, and an alloy resin obtained by blending a polyamide resin with a resin having a water absorption no higher than 0.3%.

The polyamide resin obtained from metaxylylenediamine and adipic acid by polycondensation reaction is what is generally called nylon MXD6.

The alloy resin obtained by blending the polyamide resin with a resin having a water absorption no higher than 0.3% is desirable for the following reasons.

There has been proposed an idea of forming the cylindrical base from a polyamide-based electrically conductive resin. The polyamide resin (PA) for this purpose has a higher water absorption (measured according to ASTM D-570) than other resins. For example, PA66 has a value of 0.6-3% and PA6 has a value of 0.7-1.8%. Molded products with such a high water absorption may pose a problem with dimensional accuracy. That is, they expand due to water absorption when they are allowed to stand in an atmosphere at 30°C and above and 90 %RH and above for 2-3 hours. Expansion may adversely affect the function of the photosensitive body and hence greatly aggravates the image quality.

According to the present invention, the polyamide resin having a high water absorption is blended with a resin having a water absorption no higher than 0.3%, and the resulting resin alloy is used as the base material. The resulting resin compound has a low water absorption and is little subject to dimensional change in a high-temperature high-humidity environment.

The polyamide resin for the resin alloy may be any known polyamide resin, such as nylon MXD6, nylon-6, nylon-11, nylon-12, nylon-46, nylon-66, nylon-610, nylon-612, nylon-1212, and copolymers thereof. There are no specific restrictions on their selection.

The low water absorption resin for the resin alloy (referred to as the blending resin) includes PP (polypropylene), PPE (polyphenylene ether), and PPS (polyphenylene sulfide) and the like, with the second and third being preferable and the second being most desirable.

The resin alloy according to the present invention may be obtained by blending the polyamide resin (such as PA66) with the blending resin in an amount of 1-70 weight%, preferably 5-50 weight%, and more preferably 10-40 weight%.

Blending may be facilitated by the aid of a compatibilizing agent to improve the compatibility of the two resin components. Good compatibility contributes to good mechanical properties (mechanical strength), low water absorption, and high chemical resistance. Examples of the compatibilizing agent include maleic acid-modified polypropylene (PP) for the PA-PP system and a copolymer of epoxy-modified polystyrene (PS) and polymethyl methacrylate (PMMA) for the PA-PPS or PA-PPE system.

The resin alloy composed of the polyamide resin and the blending resin gives a molded product which has better dimensional stability than that obtained from the polyamide resin alone, as mentioned above. This is demonstrated by Referential Examples as shown in Table 1 below. The water absorption and dimensional change in Table 1 are expressed in terms of difference between values measured before and after standing for 24 hours in a constant-temperature constant-humidity bath at 50°C and 95 %RH. It is noted that the water absorption and dimensional stability of the molded product are greatly improved when the polyamide resin is blended with the blending resin having a low water absorption.

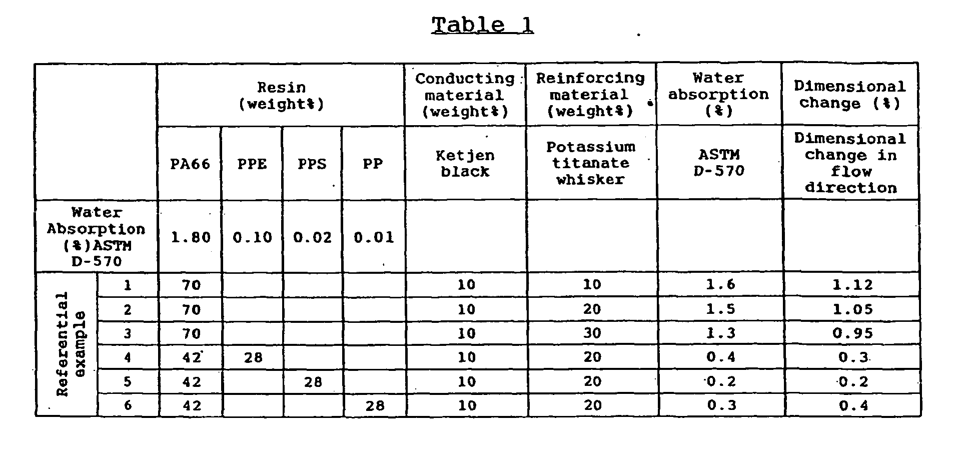

The mixed resin compound of the present invention may be incorporated with an electrically conducting material to impart electrical conductivity according to use. The electrically condutive material is not specifically restricted so long as it is capable of uniform dispersion into the above-mentioned resin. It includes, for example, carbon black, graphite, aluminum powder, copper powder, nickel powder, and electrically conductive glass powder. Carbon black is preferable. The amount of the electrically conductive material is not specifically restricted; it may range from 5 to 30 weight%, particularly 5-20 weight%, of the compound. In the case where the resin compound is intended for the cylindrical base of the photosensitive drum, the amount of the electrically conductive material should be adjusted such that the resulting molded product has a surface resistance equal to or lower than 10⁶ Ω/□, preferably equal to or lower than 10⁵ Ω/□, more preferably equal to or lower than 10⁴ Ω/□.

In addition, the resin compound may be incorporated with a variety of inorganic fillers (such as fibers) for reinforcement and extension. Examples of inorganic fillers include carbon fiber, electrically conductive or nonconductive whisker, and electrically conductive or nonconductive glass fiber. The electrically conductive fibers may also serve as the conducting material. In the case where electrically conductive fiber is used, the conducting material should be used in a reduced amount.

The inorganic filler is used in varied amounts without restrictions according to its kind and fiber length and diameter. It should be added in an amount of 1-30 weight%, preferably 5-25 weight%, more preferably 10-25 weight%, of the resin compound. According to the present invention, the inorganic filler remarkably improves the strength and stiffness of the molded produce without adverse effect on its surface smoothness.

The above-mentioned mixed resin compound may be incorporated with, in addition to the above-mentioned conducting material and inorganic filler, any known additives, such as polytetrafluoroethylene (PTFE), silicone, molybdenum sulfide, (MoS₂), and metal soap, in an adequate amount. Moreover, the above-mentioned conducting material and inorganic filler may be given surface treatment with silane coupling agent or titanate coupling agent.

The mixed resin compound is a mixture prepared by mixing the above-mentioned base resin with the above-mentioned slow-crystallizing resin to form a skin layer, both resins in pellet form. The resulting mixture of pellets is fed as such into an injection molding machine. The mixing of pellets may be accomplished by using any known mixing machine such as tumblers capable of dry blending. In the case where the mixed resin compound is incorporated with the above-mentioned inorganic fillers (such as conducting material and reinforcing material), it is desirable (although hot mandatory) that they should be preliminarily incorporated into the pellets of the base resin by kneading. Injection molding may be carried out under ordinary conditions (in terms of temperature and pressure).

The mixed resin compound will find use in various applications. Due to the fact that it forms a skin layer on its molded product and hence it provides a smooth surface even thought it is incorporated with additives (such as conducting material and reinforcing material), its preferred applications include the cylindrical base for the photosensitive drum which needs good chemical resistance, mechanical strength, and surface smoothness.

The photosensitive drum just mentioned above consists of a cylindrical base 1 and a photosensitive layer 3 formed on its outer surface as shown in Fig. 1. The cylindrical base 1 is obtained by molding from the mixed resin compound pertaining to the first aspect of the present invention. Usually, the mixed resin compound contains the above-mentioned conducting material so that it has adequate conductivity and also contains the above-mentioned inorganic filler for reinforcement. Their mixing conditions are as mentioned above.

The photosensitive drum shown in Fig. 1 is constructed such that the cylindrical base 1 has separately molded flanges 2a and 2b firmly fitted into both ends thereof. Either of the flanges 2a and 2b may be formed integrally with the cylindrical base 1 from the electrically conductive resin compound pertaining to the present invention. In this case, it is possible to form the driving gear 6 integrally with the cylindrical base from the mixed resin compound pertaining to the present invention because the mixed resin compound pertaining to the first aspect of the present invention gives a molded product having high strength and stiffness when it is incorporated with a reinforcing inorganic filler.

The outer surface of the cylindrical base 1 should preferably (although not mandatory) have a surface roughness such that the center line average height (Ra) is equal to or smaller than 0.8 µm, particularly equal to or smaller than 0.2 µm, the maximum height (Rmax) is equal to or smaller than 1.6 µm, particularly equal to or smaller than 0.8 µm, and the ten-point average height (Rz) is equal to or smaller than 1.6 µm, particularly equal to or smaller than 0.8 µm. With excessively large values of Ra, Rmax, and Rz, the outer surface of the cylindrical base 1 has surface irregularities which manifest themselves through the photosensitive layer 3 formed thereon. Such surface irregularities cause poor images. The above-mentioned desirable surface smoothness can be easily achieved by using the mixed resin compound even though the resin compound is incorporated with an inorganic filler for reinforcement.

The photosensitive layer 3 on the outer surface of the cylindrical base 1 may be formed in any known layer structure from any known material.

The structure of the photosensitive drum is not limited to the one shown in Fig. 1. For example, the flanges 2a and 2b may have protruding shafts instead of the holes 5 to receive shafts. The protruding shafts permit the photosensitive drum to be rotatably mounted on the electrophotographic apparatus. The shape of the flanges 2a and 2b and the method of driving the photosensitive drum and other structure may be changed in any manner within the scope of the present invention.

The first aspect of the present invention is directed to a resin pipe formed by injection molding and ensuing annealing from a thermoplastic resin or a resin compound based on said thermoplastic resin.

The above-mentioned thermoplastic resin or the above-mentioned resin compound based thereon is not specifically restricted so long as it can be formed into pipe by injection molding; they are properly selected according to the applications of the resin pipe to be made. In the case where the resin pipe is used as the base of the photosensitive drum, the thermoplastic should preferably be a polyamide resin (or nylon resin) which gives a resin pipe having good mechanical strength and smooth surface (which is desirable for the photosensitive layer). This polyamide resin is discussed above. It is necessary to use at least one species selected from a polyamide resin obtained from metaxylylenediamine and adipic acid, and an alloy resin obtained by blending a polyamide resin with a resin having a water absorption no higher than 0.3%, on account of their good dimensional stability attained by annealing.

According to the present invention, the molding material may be a mixture of resins or a mixture of the above-mentioned nylon MXD6 and/or the alloy resin obtained by blending the polyamide resin with a resin having a water absorption of 0.3% or less with another resin. Examples of another resin include nylon-11, nylon-12, nylon-46, nylon-66, nylon-610, nylon-612, nylon-1212, or a copolymer thereof. Their mixing ratio is not specifically restricted. However, it is desirable that the nylon MXD6 or the alloy resin obtained by blending the polyamide resin with a resin having a water absorption of 0.3% or less a mixture thereof should account for 30-100 weight%, preferably 40-100 weight%, in the mixture.

The conducting material, inorganic filler or any known additives may be incorporated with the additives as discussed above.

In the first aspect of the present invention, there are no restrictions on the amount of the conducting material such as carbon black; however, a desirable amount is 5-30 weight%, particularly 5-20 weight%, of the resin compound. In the case where the resin compound is to be used for the cylindrical base of the photosensitive drum, the amount of carbon black should be adjusted so that the resulting molded product has a surface resistance equal to or lower than 10⁶ Ω/□, preferably equal to or lower than 10⁵ Ω/□, more preferably equal to or lower than 10⁴ Ω/□.

In the first aspect of the present invention, the amount of inorganic filler is properly selected without specific restrictions according to the kind of the filler and the length and diameter of fiber. It is usually 1-30 weight%, preferably 5-25 weight%, more preferably 10-25 weight%, of the resin compound. The inorganic filler remarkably improves the strength and stiffness of the molded product without adverse effect on the surface smoothness.

The photosensitive drum according to the first aspect of the present invention is a cylindrical body whose base is formed from the above-mentioned electrically conductive resin compound. The cylindrical base may be formed by any known method, such as injection molding and extrusion molding, the former being preferable. Molding may be carried out under ordinary conditions (for temperature and pressure).

The first aspect of the present invention is intended to provide a resin pipe which has its dimensional stability improved by annealing after demolding.

This annealing is accomplished by heating, after demolding, the molded product in a constant-temperature bath or the like. Annealing conditions are not specifically restricted but are selected according to the molding material used. Annealing temperature is usually 100-140°C, particularly 100-130°C, and annealing time is usually 0.5-2 hours, particularly 1-1.5 hours. Annealing at lower temperatures than specified above takes a longer time than 5 hours, with insufficient stress release. Annealing at higher temperatures in excess of 140°C will cause resin decomposition and deformation, producing an adverse effect on the molded product.

The above-mentioned annealing should be performed usually at 100-140°C, preferably at 100-125°C, more preferably at 115-120°C, and usually for 0.5-2 hours, preferably for 1-1.5 hours, on the resin compound which contains as its component a polyamide resin obtained from metaxylylenediamine and adipic acid, a polyamide resin obtained from ε-caprolactam, and an alloy resin obtained by blending a polyamide resin with a resin having a water absorption no higher than 0.3%. Annealing in this manner ensures stress release and leads to a stable crystalline structure.

The molding method according to the first aspect of the present invention is adequately applied to the production of the resin pipe (the cylindrical base for the photosensitive drum) which needs high dimensional accuracy.

The photosensitive drum shown in Fig. 1 consists of a cylindrical base 1 and separately molded flanges 2a and 2b which are firmly fitted into both ends of the cylindrical base 1. Either of the flanges 2a and 2b may be formed integrally with the cylindrical base 1 by the molding method according to the second aspect of the present invention mentioned above. The flange has high strength and stiffness if it is formed from the above-mentioned resin compound incorporated with an inorganic filler, so that the flange may be formed integrally with the driving gear 6.

In the case where the thus obtained resin pipe is used as the base of the photosensitive drum, it is desirable to finish its outer surface in such a way that it has the surface roughness as specified above.

The resin pipe obtained by the method according to the first aspect of the present invention is suitable for use as the base of the photosensitive drum which needs high dimensional accuracy. However, its use is not limited to this.

### EXAMPLES

The invention will be described in more detail with reference to the following examples and comparative examples which are not intended to restrict the scope of the present invention.

### Examples 1 and 2 and Comparative Example 3

An electrically conductive resin compound of the following composition was prepared in the usual way, and it was formed by injection molding into a cylindrical base for the photosensitive drum, measuring 30 mm in outside diameter, 230 mm in length, and 2 mm in wall thickness. Injection molding employed the same mold and was carried out under the same conditions for all the samples. The resulting cylindrical base underwent annealing under the conditions shown in Table 2. (The comparative sample did not undergo annealing.) The annealed samples were examined for dimensional change with time. The results are shown in Table 2.

### Electrically conductive resin compound:

Nylon-66 ("Novamide" from Mitsubishi Empla) 50 weight%
Carbon black ("Ketjen Black" from Lion) 15 weight%
Potassium titanate whisker ("Dentol" from Outsuka Kagaku) 15 weight%
Nylon MXD6 ("Reny" from Mitsubishi Enpla) 20 weight%

**Table 2**

| | Annealing | Dimensional change with time after annealing in terms of outside diameter of resin pipe (mm) | | | | | Rating of dimensional change |
|---|---|---|---|---|---|---|---|
| | | Before annealing | 24 h after annealing | 48 h after annealing | 96 h after annealing | 240 h after annealing | |
| Example 1 | 120°, 60 min | 29.96 | 29.96 | 29.95 | 29.95 | 29.95 | Small |
| Example 2 | 100°C, 60 min | 29.95 | 29.95 | 29.94 | 29.94 | 29.94 | Small |
| Comparative Example 3 | Not annealed | 29.95 | 29.94 | 29.94 | 29.92 | 29.88 | Large |

It is noted from Table 2 that the cylindrical base, which underwent annealing at 100-140°C (within the range specified in the second aspect of the present invention), is superior in dimensional stability, with a very small change after annealing.

### Effect of the invention

The production process according to the first aspect of the present invention readily provides resin pipes which are light in weight and superior in strength and dimensional stability and hence are suitable for use as the base of the photosensitive drum.

## Claims

1. A process for producing a resin pipe by injection molding from a thermoplastic resin or a resin compound based on said thermoplastic resin, wherein the resin compound contains at least one resin component selected from a polyamide resin obtained from metaxylylenediamine and adipic acid, and an alloy resin obtained by blending a polyamide resin with a resin having a water absorption no higher than 0.3%, and wherein the molded product undergoes annealing after demolding.

2. A process for producing a resin pipe as defined in Claim 1, wherein the annealing is carried out at 100-140°C for 0.5-2 hours.

3. A process for producing a resin pipe as defined in Claim 1 or Claim 2, wherein the resin pipe is an electrically conductive resin pipe formed by injection molding from an electrically conductive resin compound composed of a thermoplastic resin and an electrically conducting material dispersed therein.

4. A process for producing a resin pipe as defined in Claim 3, wherein the electrically conductive resin compound contains carbon black as an electrically conducting material.

5. A process for producing a resin pipe as defined in Claim 4, wherein the content of the carbon black is 5-30 weight%.

6. A process for producing a resin pipe as defined in any one of Claims 1 to 5, wherein the electrically conductive resin compound is one which contains a reinforcing inorganic filler dispersed therein.

7. A process for producing a resin pipe as defined in Claim 6, wherein the content of the reinforcing inorganic filler is 1-30 weight%.

8. A process for producing a resin pipe as defined in any one of Claims 1 to 7, wherein the resin pipe is a base for a photosensitive drum.

## Patentansprüche

1. Verfahren zur Herstellung eines Harzrohrs durch Spritzgießen aus einem thermoplastischen Harz oder einer Harzverbindung, die auf diesem thermoplastischen Harz basiert, worin die Harzverbindung zumindest eine Harzkomponente umfasst, die aus einem aus Metaxylylendiamin und Adipinsäure erhaltenen Polyamidharz und einer durch Mischen eines Polyamidharzes mit einem Harz mit einer Wasserabsorption von nicht mehr als 0,3 % erhaltenen Mischharz ausgewählt ist, und worin das geformte Produkt nach dem Herausnehmen aus der Form getempert wird.

2. Verfahren zur Herstellung eines Harzrohrs nach Anspruch 1, worin das Tempern 0,5-2 h lang bei 100-140 °C durchgeführt wird.

3. Verfahren zur Herstellung eines Harzrohrs nach Anspruch 1 oder Anspruch 2, worin das Harzrohr ein elektrisch leitfähiges Harzrohr ist, das durch Spritzgießen aus einer elektrisch leitfähigen Harzverbindung hergestellt wird, die aus einem thermoplastischen Harz und einem darin dispergierten elektrisch leitfähigen Material besteht.

4. Verfahren zur Herstellung eines Harzrohrs nach Anspruch 3, worin die elektrisch leitfähige Harzverbindung Ruß als elektrisch leitendes Material enthält.

5. Verfahren zur Herstellung eines Harzrohrs nach Anspruch 4, worin der Gehalt an Ruß 5-30 Gew.-% beträgt.

6. Verfahren zur Herstellung eines Harzrohrs nach einem der Ansprüche 1 bis 5, worin die elektrisch leitfähige Harzverbindung eine solche ist, in der ein anorganischer Verstärkerfüllstoff dispergiert ist.

7. Verfahren zur Herstellung eines Harzrohrs nach Anspruch 6, worin der Gehalt des anorganischen Füllstoffs 1-30 Gew.-% beträgt.

8. Verfahren zur Herstellung eines Harzrohrs nach einem der Ansprüche 1 bis 7, worin das Harzrohr eine Basis für eine lichtempfindliche Trommel darstellt.

## Revendications

1. Procédé de production d'un tuyau en résine par moulage par injection à partir d'une résine thermoplastique ou d'un composé de résine à base de ladite résine thermoplastique, où ledit composé de résine contient au moins un composant de résine sélectionné parmi une résine polyamide obtenue à partir de métaxylylènediamine et d'acide adipique et une résine en alliage obtenue par mélange d'une résine polyamide avec une résine ayant une absorption d'eau qui ne dépasse pas 0,3%, et où le produit moulé subit un recuit après démoulage.

2. Procédé de production d'un tuyau en résine tel que défini à la revendication 1, où le recuit est effectué à 100-140°C pendant 0,5-2 heures.

3. Procédé de production d'un tuyau en résine tel que défini à la revendication 1 ou la revendication 2, où le tuyau en résine est un tuyau en résine électriquement conducteur formé par moulage par injection d'un composé de résine électriquement conducteur composé d'une résine thermoplastique et d'une matière électriquement conductrice qui y est dispersée.

4. Procédé de production d'un tuyau de résine tel que défini à la revendication 3, où le composé de résine électriquement conducteur contient du noir de carbone en tant que matière électriquement conductrice.

5. Procédé de production d'un tuyau de résine tel que défini à la revendication 4, où la teneur en noir de carbone est de 5-30% en poids.

6. Procédé de production d'un tuyau de résine tel que défini dans l'une quelconque des revendications 1 à 5, où le composé de résine électriquement conducteur en est un qui contient une charge inorganique de renforcement qui y est dispersée.

7. Procédé de production d'un tuyau de résine tel que défini à la revendication 6, où la teneur en charge inorganique de renforcement est de 1-30% en poids.

8. Procédé de production d'un tuyau de résine tel que défini dans l'une quelconque des revendications 1 à 7, où le tuyau de résine est une base pour un tambour photosensible.
